(19) Europäisches Patentamt
European Patent Office
Office européen des brevets

(11) EP 2 639 742 A2

(12) **EUROPEAN PATENT APPLICATION**

(43) Date of publication:
**18.09.2013 Bulletin 2013/38**

(51) Int Cl.:
**G06K 9/00** (2006.01)

(21) Application number: **13158347.8**

(22) Date of filing: **08.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.03.2012 JP 2012053962**

(71) Applicant: **Honda Motor Co., Ltd.**
**Tokyo 107-8556 (JP)**

(72) Inventors:
• **Nagaoka, Nobuharu**
 **Saitama, 351-0193 (JP)**
• **Aimura, Makoto**
 **Saitama, 351-0193 (JP)**

(74) Representative: **Herzog, Markus et al**
 **Weickmann & Weickmann**
 **Postfach 860820**
 **81635 München (DE)**

(54) **Vehicle periphery monitoring apparatus**

(57) If a pedestrian head candidate extractor (101) extracts a light (70a) as a pedestrian head candidate, then when an other vehicle candidate detector (102) detects a horizontal high-luminance area (76) which is greater in area than the light (70a) extracted as the pedestrian head candidate, within a prescribed range beneath the horizontal position of the light (70a), an other vehicle determiner (103) determines the light (70a) extracted as the pedestrian head candidate as part of another car (Car).

FIG. 6

EP 2 639 742 A2

**Description**

BACKGROUND OF THE INVENTION

Field of the Invention:

The present invention relates to a vehicle periphery monitoring apparatus for monitoring the periphery of a vehicle based on an image captured by an infrared camera mounted on the vehicle, and more particularly to a vehicle periphery monitoring apparatus which is suitable for use when the vehicle is driving at night or in dark places.

Description of the Related Art:

As disclosed in Japanese Laid-Open Patent Publication No. 2003-284057 (hereinafter referred to as "JP2003-284057A"), there has heretofore been known a vehicle periphery monitoring apparatus incorporated in a driver's own vehicle which detects an object such as a pedestrian or the like that could possibly contact the driver's own vehicle from images (a grayscale image and its binarized image) of the periphery of the driver's own vehicle captured by infrared cameras, and provides the driver with information about the detected object.

The vehicle periphery monitoring apparatus disclosed in JP2003-284057A detects a high-temperature area of the two images captured by a pair of left and right infrared cameras (stereo camera system) as an object, and calculates the distance up to the object by determining the parallax of the object in the two images. The vehicle periphery monitoring apparatus then detects an object such as a pedestrian or the like that is likely to affect the traveling of the driver's own vehicle, i.e., that could possibly contact the driver's own vehicle, from the moving direction and position of the object detected in the captured images (see paragraphs [0014], [0018] of JP2003-284057A).

However, since such vehicle periphery monitoring apparatuses with a pair of left and right infrared cameras are expensive, they have been incorporated in limited luxury cars only.

In an attempt to reduce the cost of the vehicle periphery monitoring apparatus, a vehicle periphery monitoring apparatus disclosed in Japanese Patent No. 4521642 (hereinafter referred to as "JP4521642B2") employs a single vehicle-mounted infrared camera which captures at least two images (two frames) of an object in the periphery of a vehicle at a given interval of time. As the relative speed between the object and the vehicle incorporating the vehicle periphery monitoring apparatus is higher, the size of an image of the object in the image captured later changes more greatly from the size of an image of the object in the image captured earlier. As the relative speed between the object and the vehicle is higher, the object that is present ahead of the vehicle reaches the vehicle in a shorter period of time. Consequently, even a single infrared camera is able to monitor the periphery of a vehicle by estimating a period of time which an object takes to reach the vehicle, so-called TTC (Time To Contact or Time to Collision), from a rate of change of the size of images of an object which are captured at a given interval of time (see paragraphs [0019], [0020] of JP4521642B2).

SUMMARY OF THE INVENTION

According to JP4521642B2, the vehicle periphery monitoring apparatus judges whether an object that is imaged at different times is a person or a vehicle by dividing the object into local areas depending on the object, i.e., a person or a vehicle, making images of the object that are captured at different times equal in size to each other, and decides that the object is a person or a vehicle if the degree of correlation between the local areas is equal to or greater than a threshold value.

When a vehicle which incorporates the vehicle periphery monitoring apparatus disclosed in JP2003-284057A or JP4521642B2 is driving at night, it is capable of displaying a video image of a pedestrian walking ahead of the vehicle which has been detected by an infrared camera as a target object to be monitored that cannot clearly be seen by the driver of the vehicle.

When the vehicle periphery monitoring apparatus of the related art detects a person, i.e., a pedestrian, at night or in dark places, it can easily identify the shape of the head of the person from the image captured by the infrared camera because the head is exposed and has a high surface temperature and the head has a round shape.

When the infrared camera of the vehicle periphery monitoring apparatus of the related art captures the front end of another vehicle, e.g., an oncoming vehicle, at night, it can easily identify the headlights thereof that are positioned at respective ends in the transverse directions of the other vehicle. When the infrared camera of the vehicle periphery monitoring apparatus captures the rear end of another vehicle, e.g., a preceding vehicle running ahead in the same direction, at night, it can easily identify the taillights thereof that are positioned at respective ends in the transverse directions of the other vehicle.

However, since the headlights and taillights of other vehicles are not significantly different from the heads of pedestrians in height from the road, and the shapes of the lights are similar to the shapes of the heads of pedestrians in infrared images (video images), the vehicle periphery monitoring apparatus of the related art finds it difficult to distinguish between the headlights or taillights of other vehicles and the heads of pedestrians. Furthermore, as described later, the vehicle periphery monitoring apparatus of the related art occasionally fails to decide that there are two headlights or taillights on other vehicles on account of heat emitted by the exhaust pipes, etc. of the other vehicles and spread to the vehicle bodies of the other vehicles.

It is an object of the present invention to provide a vehicle periphery monitoring apparatus which is capable of accurately distinguishing between another vehicle and a pedestrian.

According to the present invention, there is provided a vehicle periphery monitoring apparatus for detecting an object in the periphery of a vehicle based on an image captured by an infrared camera mounted on the vehicle, and determining the type of the detected object, comprising a pedestrian head candidate extractor for extracting a pedestrian head candidate from the image, an other vehicle candidate detector for detecting a high-luminance area which is greater in area than the pedestrian head candidate and has a horizontal length equal to or greater than a prescribed width, within a prescribed range beneath or below the extracted pedestrian head candidate, and an other vehicle determiner for determining the pedestrian head candidate as part of another vehicle when the other vehicle candidate detector detects the high-luminance area.

According to the present invention, there is also provided a vehicle periphery monitoring apparatus for detecting an object in the periphery of a vehicle based on an image captured by an infrared camera mounted on the vehicle, and determining the type of the detected object, comprising pedestrian head candidate extracting means for extracting a pedestrian head candidate from the image, other vehicle candidate detecting means for detecting a high-luminance area which is greater in area than the pedestrian head candidate and has a horizontal length equal to or greater than a prescribed width, within a prescribed range beneath the extracted pedestrian head candidate, and other vehicle determining means for determining the pedestrian head candidate as part of another vehicle when the other vehicle candidate detecting means detects the high-luminance area.

According to the present invention, there is further provided a method of determining a type of an object for use in a vehicle periphery monitoring apparatus for detecting an object in the periphery of a vehicle based on an image captured by an infrared camera mounted on the vehicle, comprising a pedestrian head candidate extracting step of extracting a pedestrian head candidate from the image, an other vehicle candidate detecting step of detecting a high-luminance area which is greater in area than the pedestrian head candidate and has a horizontal length equal to or greater than a prescribed width, within a prescribed range beneath the extracted pedestrian head candidate, and an other vehicle determining step of determining the pedestrian head candidate as part of another vehicle when the high-luminance area is detected in the other vehicle candidate detecting step.

According to the present invention, when a high-luminance area which is greater in area than the pedestrian head candidate and has a horizontal length equal to or greater than a prescribed width is detected in a prescribed range beneath the pedestrian head candidate that is extracted from the image acquired by the infrared camera, the pedestrian head candidate is determined as part of another vehicle. Consequently, the other vehicle and a pedestrian can be distinguished from each other highly accurately.

When the other vehicle candidate detector detects the pedestrian head candidate in a rigid body (an object whose shape remains unchanged) in the image, the other vehicle determiner may determine the rigid body as the other vehicle.

The other vehicle candidate detector may further detect an engine exhaust pipe candidate or a tire candidate in the image, and when the other vehicle candidate detector detects the high-luminance area above the engine exhaust pipe candidate or the tire candidate, the other vehicle determiner may determine an object including the pedestrian head candidate and the engine exhaust pipe candidate or an object including the pedestrian head candidate and the tire candidate as the other vehicle.

When the other vehicle candidate detector further detects another high-luminance area equal to or greater than a prescribed area or a low-luminance area equal to or greater than a prescribed area above the pedestrian head candidate in the image, the other vehicle determiner may determine the pedestrian head candidate as part of the other vehicle regardless whether or not the other vehicle candidate detector detects the high-luminance area which is greater in area than the pedestrian head candidate and has the horizontal length.

In this case, if the temperature outside of the vehicle is equal to or higher than a first temperature, then the other vehicle determiner may judge whether or not there is a low-luminance area which is greater in area than the pedestrian head candidate, above the pedestrian head candidate, and if the temperature outside of the vehicle is equal to or lower than a second temperature which is lower than the first temperature, then the other vehicle determiner may judge whether or not there is a high-luminance area which is greater in area than the pedestrian head candidate, above the pedestrian head candidate. In this manner also, the other vehicle can be detected.

According to the present invention, as described above, when a high-luminance area which is horizontally greater in area than the pedestrian head candidate and has a horizontal length equal to or greater than a prescribed width is detected within a prescribed range beneath the pedestrian head candidate that is extracted from the image acquired by the infrared camera, the pedestrian head candidate is determined as part of another vehicle. Therefore, another vehicle and a pedestrian can be distinguished from each other highly accurately.

The above and other objects, features, and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1 is a block diagram of a vehicle periphery monitoring apparatus according to an embodiment of the present invention;

FIG. 2 is a perspective view of a vehicle which incorporates the vehicle periphery monitoring apparatus shown in FIG. 1;

FIG. 3 is a flowchart of an operation sequence of an image processing unit of the vehicle periphery monitoring apparatus;

FIG. 4 is a diagram showing an image of a pedestrian candidate;

FIG. 5 is a diagram showing an image of a vehicle which could possibly be detected in error as a pedestrian candidate;

FIG. 6 is a diagram showing another image of a vehicle which could possibly be detected in error as a pedestrian candidate;

FIG. 7 is a diagram showing an image of a vehicle which could possibly be detected in error as a pedestrian candidate according to another embodiment of the present invention;

FIG. 8A is a diagram showing a present image;

FIG. 8B is a diagram showing a past image;

FIG. 9 is a table showing the coordinates of various parts of the present and past images; and

FIG. 10 is a perspective view of a vehicle which incorporates a vehicle periphery monitoring apparatus according to a modification.

DESCRIPTION OF THE PREFERRED EMBODIMENTS

Preferred embodiments of the present invention will be described in detail below with reference to the drawings.

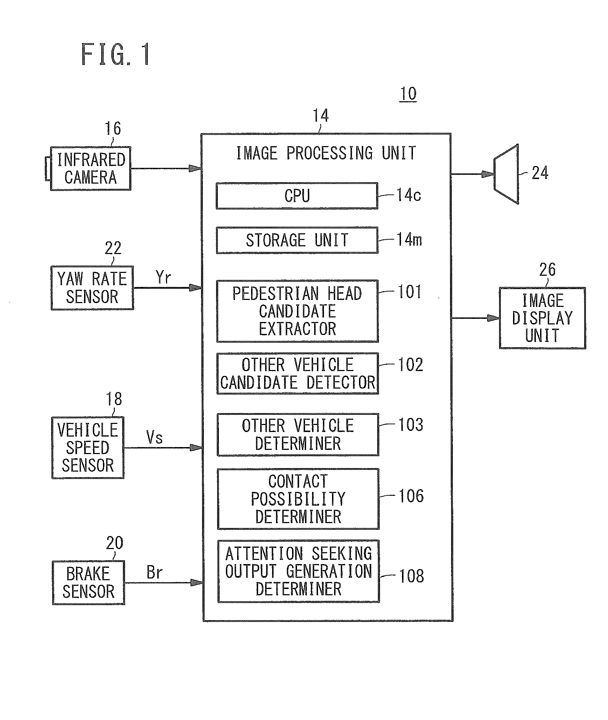

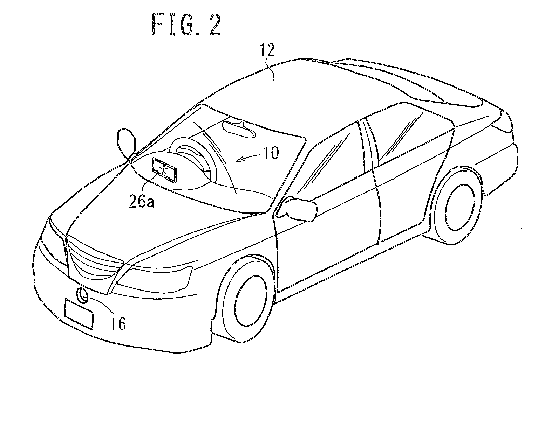

FIG. 1 shows in block form a vehicle periphery monitoring apparatus 10 according to an embodiment of the present invention, and FIG. 2 shows in perspective a vehicle (hereinafter also referred to as "driver's own vehicle") 12 which incorporates the vehicle periphery monitoring apparatus 10 shown in FIG. 1.

As shown in FIGS. 1 and 2, the vehicle periphery monitoring apparatus 10 includes an image processing unit 14 for controlling the vehicle periphery monitoring apparatus 10, a single (monocular) infrared camera 16 (image capturing device) connected to the image processing unit 14, a vehicle speed sensor 18 for detecting a vehicle speed Vs of the vehicle 12, a brake sensor 20 for detecting a depressed amount (brake depressed amount) Br of a brake pedal which is operated by the driver of the vehicle 12, a yaw rate sensor 22 for detecting a yaw rate Yr of the vehicle 12, a speaker 24 for outputting a warning sound or the like, and an image display unit 26 comprising a HUD (Head Up Display) 26a for displaying an image captured by the infrared camera 16 to make the driver of the vehicle 12 recognize an object (moving object, target object to be monitored) such as a pedestrian or the like that is likely to contact the vehicle 12.

The image display unit 26 is not limited to the HUD 26a, but may be a display unit for displaying a map, etc. of a navigation system incorporated in the vehicle 12 or a display unit (multi-information display unit) disposed in a meter unit for displaying fuel consumption information, etc.

The image processing unit 14 detects a target object to be monitored, such as a pedestrian or the like, in front of the vehicle 12, from an infrared image of the periphery of the vehicle 12 and signals indicative of a traveling state of the vehicle 12, i.e., signals representing the vehicle speed Vs, the brake depressed amount Br, and the yaw rate Yr. If the image processing unit 14 decides that it is highly likely for the vehicle 12 to collide with the target object to be monitored, then the image processing unit 14 outputs a warning sound, e.g., a succession of blips from the speaker 24, and highlights the target object to be monitored in a captured image displayed as a grayscale image on the HUD 26a, by surrounding the target object with a bright color frame such as a yellow or red frame, thereby arousing attention of the driver.

The image processing unit 14 includes an input circuit comprising an A/D converting circuit for converting analog signals input thereto into digital signals, an image memory (storage unit 14m) for storing digital image signals, a CPU (Central Processing Unit) 14c for performing various processing operations, a storage unit 14m including a RA (Random Access Memory) for storing data being processed by the CPU 14c and a ROM (Read Only Memory) for storing a program executed by the CPU 14c, tables, maps, and templates {pedestrian (human body) shape templates, vehicle shape templates, etc.}, a clock (clock section) and a timer (time measuring section), and an output circuit for outputting a drive signal for the speaker 24 and a display signal for the image display unit 26. Output signals from the infrared camera 16, the yaw rate sensor 22, the vehicle speed sensor 18, and the brake sensor 20 are converted by the A/D converting circuit into digital signals, which are then input to the CPU 14c.

The CPU 14c of the image processing unit 14 reads the supplied digital signals and executes the program while referring to the tables, the maps, and the templates, thereby functioning as various functioning means (also referred to as "functioning sections"), described below, to send the drive signal (e.g., sound signal, display signal) to the speaker 24 and the display signal to the image display unit 26. The functioning means may alternatively be performed by pieces of hardware.

According to the present embodiment, the functioning sections of the image processing unit 14 include a pedestrian head candidate extractor 101, an other vehicle candidate detector 102, an other vehicle determiner 103 functioning as a target object determiner, a contact possibility determiner 106, and an attention seeking output generation determiner 108. When the pedestrian head candidate extractor 101 extracts a pedestrian head candidate from an image (captured image) acquired by the infrared camera 16, the pedestrian head candidate extractor 101 also extracts a pedestrian candidate including a head candidate. In other words, the pedestrian head candidate extractor 101 also functions as a pedestrian candidate extractor.

The image processing unit 14 basically executes an object recognizing (distinguishing) program (object detecting program) for recognizing (distinguishing) an object by comparing an image captured by the infrared camera 16 with pattern templates representing human body shapes, animal shapes, vehicle shapes, and artificial structure shapes such as columns or the like including utility poles, which are stored in the storage unit 14m.

As shown in FIG. 2, the infrared camera 16 is mounted in a front bumper of the vehicle 12 with an optical axis thereof extending parallel to the longitudinal axis of the vehicle 12. The infrared camera 16 has such characteristics that its output signal (imaging signal) has a higher level (a higher luminance level) as the temperature of a target object imaged thereby is higher.

The HUD 26a is positioned to display its display screen on the front windshield of the vehicle 12 at such a position where it does not obstruct the field of front vision of the driver.

The image processing unit 14 converts a video signal output from the infrared camera 16 into digital data at frame clock intervals/periods of several tens milliseconds, e.g., 1 second/30 frames [ms], and stores the digital data in the storage unit 14m (image memory). The image processing unit 14 includes the above functioning means to perform various processing operations on an image of an area in front of the vehicle 12 which is represented by the digital data stored in the storage unit 14m.

The pedestrian head candidate extractor 101 extracts an image portion of a target object to be monitored, such as a pedestrian, a vehicle (another vehicle), etc., from the image of the area in front of the vehicle 12 which is stored in the storage unit 14m, and extracts a pedestrian head candidate having a prescribed size based on the extracted image portion.

The other vehicle candidate detector 102 detects a high-luminance area, to be described later, having an area greater than the area of the pedestrian head candidate detected by the pedestrian head candidate extractor 101 and a horizontal length equal to or greater than a prescribed width, within a prescribed range below the pedestrian head candidate.

When the other vehicle candidate detector 102 detects the high-luminance area, the other vehicle determiner 103 determines the pedestrian head candidate as part of the other vehicle.

The attention seeking output generation determiner 108 calculates a rate of change Rate of the size of the image portion of the target object to be monitored between images that are captured at the above frame clock intervals/ periods (prescribed time intervals), estimates a period of time T which the target object to be monitored takes to reach the vehicle 12 using the rate of change Rate, calculates the position of the target object to be monitored in the actual space, and calculates a motion vector in the actual space of the target object to be monitored.

The period of time TTC (Time To Contact) that the target object to be monitored takes to reach the vehicle 12, i.e., the period of time TTC that the target object to be monitored takes to contact the vehicle 12, can be determined from the rate of change Rate (determined from the image) and image capturing intervals (frame clock periods) dT (known), which is a prescribed time intervals, according to the following expression (1):

$$\mathtt{TTC = dT \times Rate/(1 - Rate)} \qquad \cdots (1)$$

The rate of change Rate is determined as a ratio between the width or length W0 (which may be stored as a number of pixels) of the target object to be monitored in an image captured earlier and the width or length W1 (which may be stored as a number of pixels) of the target object to be monitored in an image captured later (Rate = W0/W1).

The distance Z up to the target object to be monitored is determined from the following expression (2), which is provided by multiplying both sides of the expression (1) by the vehicle speed Vs:

$$Z = Rate \times Vs \times dT/(1 - Rate) \qquad \cdots(2)$$

Incidentally, more precisely the vehicle speed Vs should be replaced with a relative speed between the target object to be monitored and the vehicle 12. In a case where the target object is not moving, the relative speed is equal to the vehicle speed Vs.

The attention seeking output generation determiner 108 calculates a positional change $\Delta$x (horizontal) and a positional change $\Delta$y (vertical) of the image portion of the target object to be monitored between the images that are captured at the prescribed time intervals, and determines a contact possibility that the target object to be monitored and the vehicle 12 will contact each other, based on the determined period of time TTC and the calculated positional changes (motion vector) $\Delta$x, $\Delta$y.

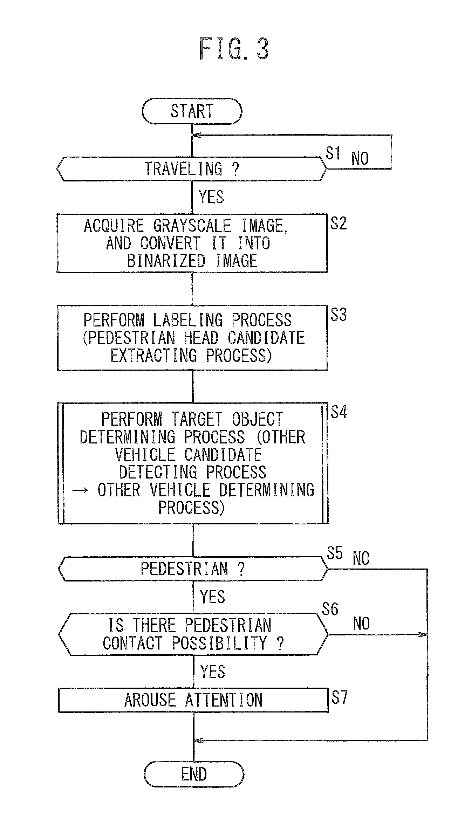

The vehicle periphery monitoring apparatus 10 is basically constructed as described above. An operation sequence of the vehicle periphery monitoring apparatus 10 will be described in detail below with reference to a flowchart shown in FIG. 3.

In step S1 shown in FIG. 3, the image processing unit 14 judges whether the vehicle 12 is traveling or at rest based on, for example, the vehicle speed Vs detected by the vehicle speed sensor 18. If the vehicle 12 is at rest (S1: NO), then the operation sequence is stopped.

If the vehicle 12 is traveling (S1: YES), then in step S2 the image processing unit 14 acquires an infrared image of an area within a given angle of view in front of the vehicle 12, which is represented by an output signal from the infrared camera 16 in each frame, converts the infrared image into a digital grayscale image, stores the digital grayscale image in the image memory (storage unit 14m), and binarizes the stored grayscale image.

More specifically, the image processing unit 14 performs a binarizing process on the grayscale image by converting areas brighter than a luminance threshold value for determining a human luminance level into "1" (white) and areas darker than the luminance threshold value into "0" (black) to generate a binarized image in each frame, and stores the binarized image in the storage unit 14m.

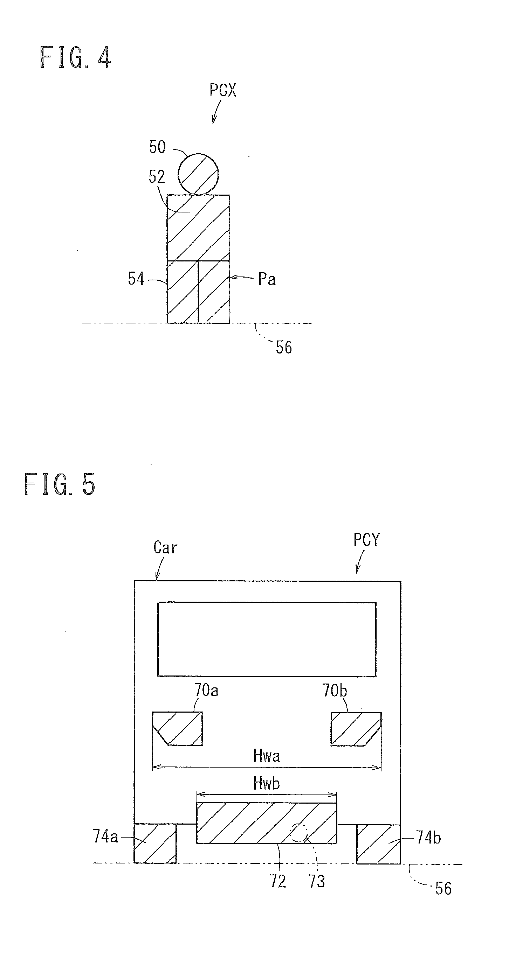

In step S3, the image processing unit 14 detects (extracts), as shown in FIG. 4, a pedestrian candidate PCX comprising a head candidate 50, a body candidate 52 including arms, and two leg candidates 54 of a pedestrian Pa. A substantially horizontal line interconnecting the lower ends of the two leg candidates 54 is regarded as a point of contact with a road surface 56.

Since the head of a person has a high surface temperature and a round shape, the head candidate 50 can easily be extracted from the binarized image which corresponds to the grayscale image converted from the infrared image captured by the infrared camera 16. The binarized image in each frame is stored in the storage unit 14m.

Since the pedestrian candidate PCX is walking with its arms swinging and its legs moving up and down, its shape is changing as confirmed from the image in each frame. The pedestrian candidate PCX is thus not detected as a rigid body, such as another vehicle, whose shape remains unchanged between images in respective frames.

In step S3, when the height of an object having a head candidate 50 from the road surface 56 is within a prescribed height range, the object is estimated as a pedestrian candidate PCX, and its image is stored as being labeled as run-length data, i.e., a labeling process is performed on its image. At this time, the image thus processed is a large quadrangle-shaped image including a quadrangle circumscribing the pedestrian candidate PCX. If necessary, large quadrangle-shaped images including quadrangles circumscribing pedestrian candidates PCX are converted into images of one size in respective frames for easier image processing.

In the binarizing process in step S2, the image of another vehicle Car shown in FIG. 5 is processed as follows: Lights 70a, 70b on laterally spaced left and right end portions of the other vehicle Car, such as headlights (oncoming car) or taillights (preceding car), a front grill (oncoming car) or an exhaust pipe 72 (preceding car) on a lower central portion of the other vehicle Car, and left and right tires 74a, 74b of the other vehicle Car are indicated as hatched regions because of their higher luminance level.

Other portions of the vehicle body of the other vehicle are indicated depending on the ambient temperature. If the ambient temperature is lower than another portion of the vehicle body of the other vehicle Car, the other portion is indicated as blank, with the background being sectioned by the shape of the other vehicle Car.

Incidentally, the road surface 56 can be detected based on a horizontal line interconnecting the lower ends of the tires 74a, 74b.

When the horizontally spaced lights 70a, 70b of a higher luminance level are detected in the binarizing process, a quadrangular mask having a prescribed area and extending horizontally, which, for example, has a horizontal width greater than the horizontal width of the other vehicle Car, generally covering a distance from the left end of the light 70a to the right end of the light 70b, and a vertical width slightly greater than the vertical width of the lights 70a, 70b, is applied to the image of the other vehicle Car and vertically moved above the lights 70a, 70b, and an area having a succession of identical pixel values within the grayscale image in the mask can be detected (extracted) as a roof (and a roof edge). Another quadrangular mask extending vertically, which, for example, has a horizontal width comparable to the horizontal width of the lights 70a, 70b and a vertical width which is 1 to 2 times the vertical width of the lights 70a, 70b, is applied laterally of the lights 70a, 70b, and an area having a succession of identical pixel values within the grayscale image in the mask can be detected (extracted) as a pillar (and a pillar edge) or a fender (and a fender edge).

The other vehicle Car thus detected has its lights 70a, 70b whose vertical height from the road surface 56 is within a height range that could possibly be detected in error as a head 50. Therefore, the other vehicle Car is temporarily estimated as a pedestrian candidate PCY, and its image is stored as being labeled as run-length data, i.e., a labeling process is performed on its image in step S3.

At this time, the image thus processed is a large quadrangle-shaped image including a quadrangle circumscribing the pedestrian candidate PCY. If necessary, large quadrangle-shaped images including quadrangles circumscribing pedestrian candidates PCY are converted into images of one size in respective frames for easier image processing.

The processing of steps S2, S3 is carried out by the pedestrian head candidate extractor 101. The pedestrian head candidate extractor 101 (pedestrian head candidate extracting means, pedestrian head candidate extracting step) thus extracts a pedestrian candidate PCX (see FIG. 4) including a head candidate 50 as a pedestrian head candidate, and a pedestrian candidate PCY (see FIG. 5) including lights 70a, 70b as a pedestrian head candidate.

In step S4, the other vehicle determiner 103 which also functions as a target object determiner performs a target object determining process on the pedestrian candidate PCX (FIG. 4) and the pedestrian candidate PCY (FIG. 5) using the other vehicle candidate detector 102, i.e., judges whether each of the pedestrian candidate PCX (FIG. 4) and the pedestrian candidate PCY (FIG. 5) is a pedestrian Pa that is actually walking or another vehicle Car.

In this case, by analyzing images that are successively acquired, the other vehicle determiner 103 determines the pedestrian candidate PCY as another vehicle Car because the pedestrian candidate PCY is actually a rigid body whose image remains unchanged in shape but changes in size only with time and whose image includes long straight edges (roof and fender), etc.

Actually, the other vehicle determiner 103 determines the shape of the other vehicle Car, i.e., judges whether it is a rigid body or not, by converting the image thereof into a circumscribed quadrangle of one size and analyzing the converted images. Since the shape of the image of the other vehicle Car remains unchanged, e.g., the distance between the lights 70a, 70b remains unchanged and the distance between the tires 74a, 74b remains unchanged, the other vehicle determiner 103 determines the pedestrian candidate PCY as a rigid body, i.e., another vehicle Car.

Actually, the other vehicle determiner 103 which functions as a target object determiner determines the pedestrian candidate PCX shown in FIG. 4 as a pedestrian Pa when it detects that the horizontal width (width of the body 52) and height (height from the road surface 56 to the top of the head) of the pedestrian candidate PCX fall within a human range, and that the pedestrian candidate PCX is not a rigid body but an object which changes in shape.

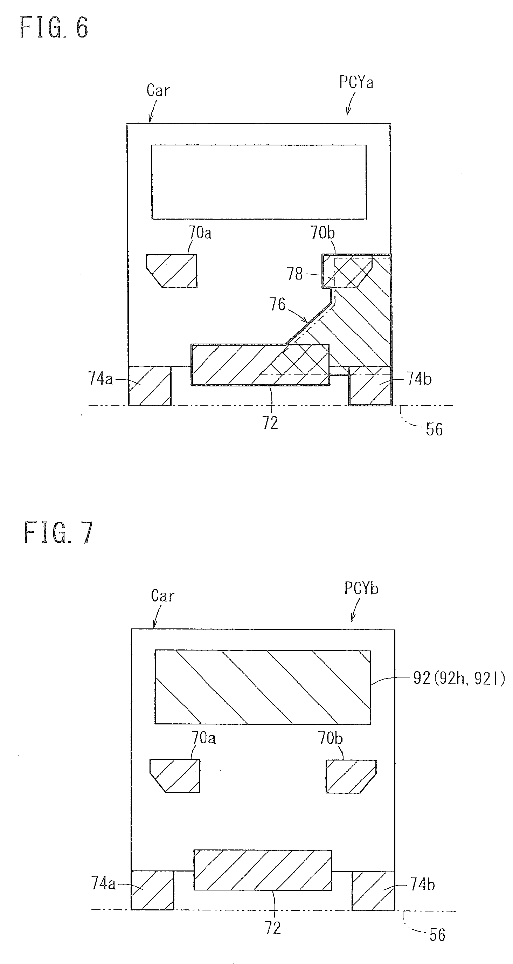

As a result of the binarizing process in step S2 and the labeling process in step S3, as shown in FIG. 6, a large high-luminance area 76 indicated by the thick solid lines may occasionally be detected on a pedestrian candidate PCYa. The high-luminance area 76 represents a combination (an area obtained by logical addition in binary images) of a heated area 78 indicated by the dot-and-dash lines and which represents a portion of the car body heated by heat-generating components such as the exhaust pipe 72 and the engine, a heated area representing the light 70b, a heated area representing the exhaust pipe 72, and a heated area representing the tire 74b. In this case, the pedestrian candidate PCYa cannot be determined as another vehicle Car since it is difficult to detect the lights 70a, 70b as a pair of lights on account of the appearance of the high-luminance area 76.

According to the present embodiment, when the pedestrian head candidate extractor 101 extracts the light 70a as a pedestrian candidate head in step S3, the other vehicle determiner 103 performs a process of determining the light 70a extracted as a pedestrian candidate head as part of the other vehicle Car if the other vehicle candidate detector 102 detects a high-luminance area 76 that is greater in area than the light 70a and has a horizontal length equal to or greater than a prescribed width, within a prescribed range (e.g., a range from the upper end of the lights 70a, 70b to the lower end of the tires 74a, 74b) beneath the horizontal position of the light 70a, in the target object determining process in step S4 which is performed by the other vehicle candidate detector 102 and the other vehicle determiner 103.

Since the target object determining process is included, when the exhaust pipe 72 of a high-luminance area which is greater in area than the light 70a or 70b extracted as a pedestrian head candidate and has a horizontal length equal to or greater than a prescribed width, is detected within a prescribed range beneath the horizontal position of the light 70a or 70b on the pedestrian candidate PCY shown in FIG. 5 which is free of the heated area 78, the pedestrian candidate PCY can be detected as another vehicle Car.

As described above, the other vehicle determiner 103 (other vehicle determining means, other vehicle determining step) determines the light 70a extracted as a pedestrian candidate head from an image acquired by the infrared camera 16, as part of the other vehicle Car if the other vehicle candidate detector 102 (other vehicle candidate detecting means, other vehicle candidate detecting step) detects a high-luminance area 76 (which may represent the exhaust pipe 72 only) that is greater in area than the light 70a and has a horizontal length equal to or greater than a prescribed width, within a prescribed range beneath the horizontal position of the light 70a. Consequently, the other vehicle Car and the pedestrian Pa can be distinguished from each other highly accurately.

When the other vehicle candidate detector 102 detects the two lights 70a, 70b extracted as pedestrian head candidates on the pedestrian candidate PCY shown in FIG. 5, as another vehicle candidate, the other vehicle determiner 103 may determine the pedestrian candidate PCY as another vehicle Car based on the relationship between the two lights 70a, 70b and the exhaust pipe 72 which represents a high-luminance area. For example, the other vehicle determiner 103 may determine the pedestrian candidate PCY as another vehicle Car based on the positional relationship between the two lights 70a, 70b and the exhaust pipe 72 which represents a high-luminance area, or when a mask covering the two lights 70a, 70b is provided such that the mask extends toward the lower side of the two lights 70a, 70b, and a high-luminance area which is greater than the areas of the lights 70a, 70b by a prescribed area or more is detected.

The other vehicle determiner 103 may also determine the pedestrian candidate PCY as another vehicle Car provided that the exhaust pipe 72 which represents a high-luminance area has a horizontal width (lateral width) Hwb that is smaller than the horizontal width (lateral width) Hwa of a region interconnecting the lights 70a, 70b detected as pedestrian head candidates.

Furthermore, when the other vehicle candidate detector 102 identifies or estimates (detects) an end 73 of the exhaust pipe 72, i.e., a pipe end for emitting exhaust gas, as shown in FIG. 5, the other vehicle determiner 103 may determine the pedestrian candidate PCY as another vehicle Car based on the shape of a high- luminance area relevant to the end 73, e.g., a shape considered to be correlated to a reference pattern (a reference pattern for the exhaust pipe 72) extending substantially concentrically outwardly from the end 73.

In this case, when the other vehicle candidate detector 102 detects the lights 70a, 70b as pedestrian head candidates, in the quadrangle circumscribing the pedestrian candidate PCY which has been determined as a rigid body (an object which remains unchanged in shape with time) in the image shown in FIG. 5, the other vehicle determiner 103 may determine the pedestrian candidate PCY determined as the rigid body, as another vehicle Car.

When the other vehicle candidate detector 102 detects the exhaust pipe 72 as an exhaust pipe candidate of the engine and the tires 74a, 74b (horizontally spaced objects held in contact with the road surface 56) as tire candidates in the image shown in FIG. 5, the other vehicle determiner 103 may determine an object including the lights 70a, 70b as the pedestrian head candidates, as another vehicle Car.

If the other vehicle candidate detector 102 detects the light 70a and the exhaust pipe 72 as an exhaust pipe candidate of the engine or the tires 74a, 74b as tire candidates in the image shown in FIG. 6, then when the other vehicle candidate detector 102 detects a high-luminance area 76 that is greater than a prescribed area of the light 70a and that includes a heated area 78 which represents a portion of the car body heated by the exhaust pipe 72, above the exhaust pipe 72 or the tires 74a, 74b, the other vehicle determiner 103 may determine an object including the light 70a as the pedestrian head candidate and the high-luminance area 76 representing the exhaust pipe 72, as another vehicle Car. In this case, when the other vehicle candidate detector 102 detects a high-luminance area 76 above the exhaust pipe 72 or the tires 74a, 74b, it may be judged that an object including the light 70a as the pedestrian head candidate and the tires 74a, 74b, as another vehicle Car.

According to another embodiment of the present invention, as shown in FIG. 7, when the other vehicle candidate detector 102 detects a pedestrian candidate PCYb having another high-luminance area 92h having a prescribed area or greater (representing, for example, a windshield of another car Car whose passenger compartment is warmed in a cold climate) or a low-luminance area 92l having a prescribed area or greater (representing, for example, a windshield of another car Car whose passenger compartment is cooled in a warm climate), above the light 70a and/or 70b as a pedestrian head candidate in the image, the other vehicle determiner 103 may determine the light 70a and/or 70b as part of the other vehicle Car regardless of whether the other vehicle candidate detector 102 detects the horizontal high luminance area 76, the heated area 78 and the exhaust pipe 72.

More specifically, if the temperature outside the vehicle is equal to or higher than a preset first temperature at which the passenger compartment needs to be cooled, then it is judged from a grayscale image, for example, whether or not there is a low-luminance area 92l which is greater in area than the light 70a or 70b above the light 70a and/or 70b, and, if there is such a low-luminance area 92l, it is determined that the light 70a and/or 70b is part of the other vehicle Car. If the temperature outside the vehicle is equal to or lower than a preset second temperature (lower than the first temperature) at which the passenger compartment needs to be warmed, then it is judged from a grayscale image, for example, whether or not there is a high-luminance area 92h which is greater in area than the light 70a or 70b above the light 70a and/or 70b, and, if there is such a high-luminance area 92h, it is determined that the light 70a and/or 70b is part of the other vehicle Car.

In this case, the temperature outside the vehicle can be detected based on the luminance of a grayscale image which corresponds to a temperature (prescribed temperature) of the head 50 which has been measured in advance. Alternatively, the temperature outside the vehicle may be detected by a temperature sensor (ambient air temperature sensor), not shown.

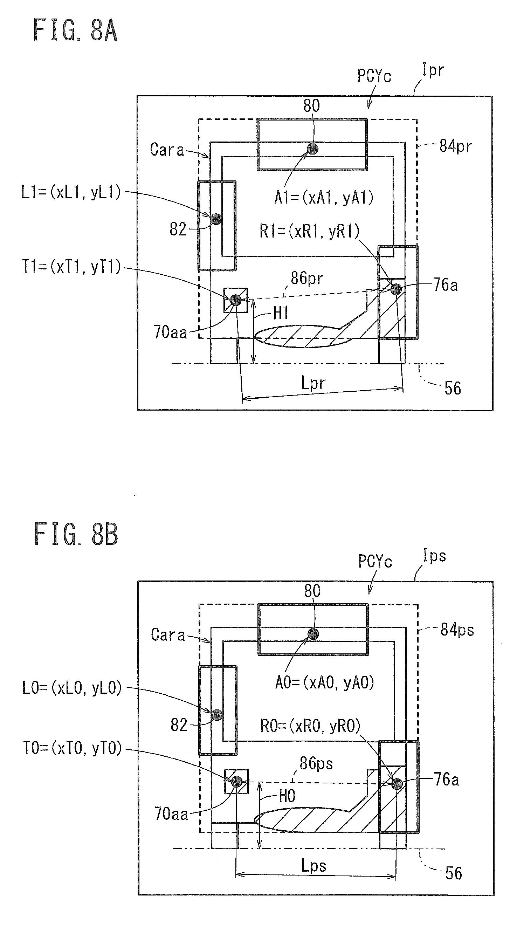

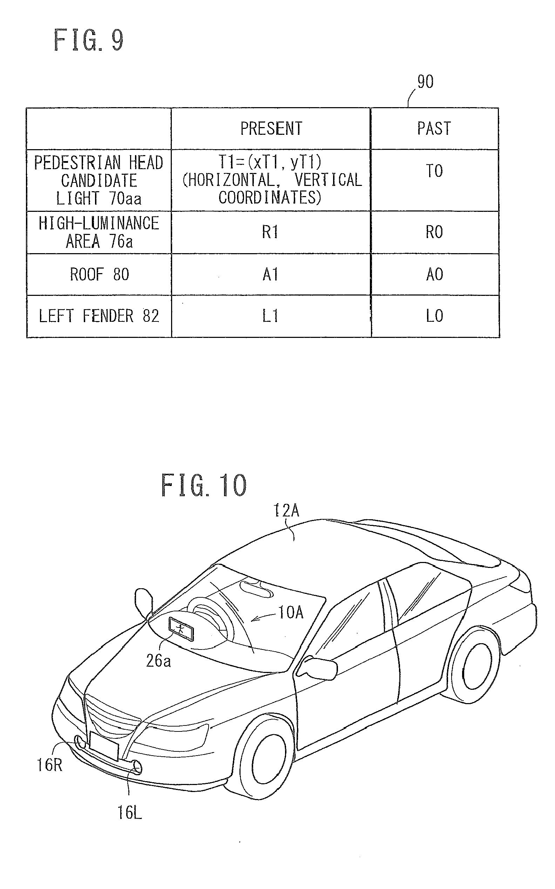

More specific details of the vehicle (other vehicle) determining process performed by the pedestrian head candidate extractor 101, the other vehicle candidate detector 102 and the other vehicle determiner 103 will be described below with reference to FIGS. 8A, 8B, and 9. FIGS. 8A and 8B show another vehicle Cara which is different in shape from the other vehicle Car shown in FIGS. 5 through 7.

FIG. 8A shows a present image Ipr and FIG. 8B shows a past image Ips.

FIG. 9 shows a table 90 of the horizontal and vertical coordinates of rectangular frames (see FIGS. 8A and 8B) in the present and past images Ipr, Ips, with their origin at the lower left end of each image.

The present and past images Ipr, Ips shown in FIGS. 8A and 8B include binarized high-luminance areas which are shown hatched. The high-luminance areas include an area representing a light 70aa extracted as a pedestrian head candidate, which is a heat source to be processed, and a high-luminance area 76a disposed beneath the light 70aa and greater in area than the light 70aa and which has a horizontal length equal to or greater than a prescribed width. In the images, only the light 70aa and the high-luminance area 76a have a luminance level "1" (white) brighter than the luminance threshold value for determining the human luminance level.

The other vehicle Cara is detected as a mask including coordinates A {(A1 = xA1, yA1), (A0 = xA0, yA0)} representing the coordinate center of a roof 80 which is a feature of the other vehicle Cara, a mask including coordinates L {(L1 = xL1, yL1), (L0 = xL0, yL0)} representing the coordinate center of a left fender (left pillar) 82, and a mask including coordinates R {(R1 = xR1, yR1), (R0 = xR0, yR0)} representing the coordinate center of a right fender and including a high-luminance area 76a.

As shown in FIG. 9, the coordinates R {(R1 = xR1, yR1), (R0 = xR0, yR0)}, the coordinates A {(A1 = xA1, yA1), (A0 = xA0, yA0)}, and the coordinates L {(L1 = xL1, yL1), (L0 = xL0, yL0)}, as well as coordinates T {(T1 = xT1, yT1), (T0 = xT0, yT0)} of a light 70aa as a pedestrian head candidate for comparing the present and past images Ipr, Ips, are calculated.

In this case, the following conditions 1, 2 are used as conditions for determining a vehicle.

However, even in a case where the conditions 1, 2 are satisfied, if the height H1 of the light 70aa extracted as a pedestrian candidate on the present image Ipr from the road surface 56 (point of intersection with the road surface) is higher than the height H0 of the light 70aa on the past image Ips, then since the light 70aa could possibly be a pedestrian head, a pedestrian candidate PCYc is not determined as another vehicle Cara under the conditions 1, 2 to be described below.

Condition 1: A polygon, i.e., a quadrangle 84 (84pr, 84ps), includes the light 70aa as a pedestrian head candidate and is formed by other masks, i.e., three masks including the coordinates R, A, L. If the past quadrangle 84ps and the present quadrangle 84pr are substantially similar to each other, then the pedestrian candidate PCYc is determined as the other car Cara, and recognized as either one of an approaching vehicle (including a vehicle at rest), a preceding vehicle followed by the driver's own vehicle, and a preceding vehicle moving apart from the driver's own vehicle (overtaking vehicle).

Condition 2: Present and past straight lines 86pr, 86ps are drawn between the light 70aa as a pedestrian head candidate and either one of the other masks, i.e., between the coordinates T (T1, T0) and the coordinates R (R1, R0) in FIGS. 8A and 8B, and the length Lpr of the present straight line 86pr and the length Lps of the past straight line 86ps are compared with each other. If Lps ≥ Lpr, i.e., if the length Lps of the past straight line 86ps is equal to or greater than the length Lpr of the present straight line 86pr, then the other vehicle Cara is recognized as a preceding vehicle followed by the driver's own vehicle or a preceding vehicle moving apart from the driver's own vehicle (overtaking vehicle).

After the target object determining process in step S4 is finished, then the other vehicle determiner 103 judges whether each of the pedestrian candidates PCY (FIG. 5), PCYa (FIG. 6), PCYb (FIG. 7), PCYc (FIGS. 8A, 8B) is a pedestrian Pa shown in FIG. 4 or not in step S5. If the other vehicle determiner 103 decides that the pedestrian candidate is determined as another vehicle Car, Cara, but not a pedestrian Pa, then it will be excluded from a subsequent processing sequence (S5: NO).

If the other vehicle determiner 103 decides that the pedestrian candidate is a pedestrian Pa shown in FIG. 4 (S5: YES), then the contact possibility determiner 106 determines a contact possibility that the pedestrian Pa and the driver's own vehicle 12 will contact each other in step S6.

More specifically, the contact possibility determiner 106 determines a contact possibility in view of the period of time TTC according to the expression (1) and each motion vector of the pedestrian Pa (possibly also the distance Z), and also based on the brake depressed amount Br, the vehicle speed Vs, and the yaw rate Yr represented by the output signals respectively from the brake sensor 20, the vehicle speed sensor 18, and the yaw rate sensor 22. If the contact possibility determiner 106 decides that the driver's own vehicle 12 will possibly contact the pedestrian Pa (S6: YES), then the attention seeking output generation determiner 108 generates an attention seeking output signal, thereby arousing attention of the driver, e.g., providing the driver with information, in step S7. More specifically, the attention seeking output generation determiner 108 highlights the pedestrian in the grayscale image on the HUD 26a, with a surrounding frame in a bright color or the like, and produces a warning sound from the speaker 24, thereby arousing attention of the driver of the vehicle 12.

In this case, the attention seeking output generation determiner 108 highlights the pedestrian Pa in the grayscale image on the HUD 26a, with a surrounding frame in a bright color such as red or yellow and generates an output for arousing the driver's attention.

The present invention is not limited to the above embodiment, but may adopt various arrangements based on the disclosure of the present description.

For example, as shown in FIG. 10, a vehicle periphery monitoring apparatus 10A may include a pair of left and right infrared cameras 16L, 16R which are incorporated in a vehicle 12A. The infrared cameras 16L, 16R, which are combined into a stereo camera system, are mounted in a front bumper of the vehicle 12A at respective positions that are substantially symmetric with respect to a transversely central portion of the vehicle 12A. The cameras 16L, 16R have respective optical axes parallel to each other and are located at equal heights from the road surface. The vehicle periphery monitoring apparatus which includes the left and right infrared cameras 16L, 16R handles a high-temperature area as a target object in left and right images of the periphery of the vehicle 12A captured by the infrared cameras 16R, 16L, calculates the distance up to the target object according to the principles of triangulation based on the parallax of the target object in the left and right images, detects an object that is likely to affect the traveling of the vehicle (driver's own vehicle) 12A, from the moving direction (motion vector) and position of the target object, and outputs an attention seeking output signal to seek attention of the driver of the vehicle 12A.

If a pedestrian head candidate extractor (101) extracts a light (70a) as a pedestrian head candidate, then when an other vehicle candidate detector (102) detects a horizontal high-luminance area (76) which is greater in area than the light (70a) extracted as the pedestrian head candidate, within a prescribed range beneath the horizontal position of the light (70a), an other vehicle determiner (103) determines the light (70a) extracted as the pedestrian head candidate as part of another car (Car).

**Claims**

1. A vehicle periphery monitoring apparatus (10, 10A) for detecting an object in the periphery of a vehicle (12, 12A) based on an image captured by an infrared camera (16, (16R, 16L)} mounted on the vehicle, and determining the type of the detected object, comprising:

   a pedestrian head candidate extractor (101) for extracting a pedestrian head candidate (50, 70a, 70b) from the image;
   an other vehicle candidate detector (102) for detecting a high-luminance area (72, 76, 76a, 92h) which is greater in area than the pedestrian head candidate (50, 70a, 70b) and has a horizontal length equal to or greater than a prescribed width, within a prescribed range beneath the extracted pedestrian head candidate (50, 70a, 70b); and
   an other vehicle determiner (103) for determining the pedestrian head candidate (70a, 70b) as part of another vehicle (Car, Cara) when the other vehicle candidate detector (102) detects the high-luminance area (72, 76, 76a, 92h).

2. The vehicle periphery monitoring apparatus according to claim 1, wherein when the other vehicle candidate detector (102) detects the pedestrian head candidate (70a, 70b) in a rigid body (PCY, 70a and 70b, 74a and 74b) in the image, the other vehicle determiner (103) determines the rigid body (PCY, 70a and 70b, 74a and 74b) as the other vehicle (Car, Cara).

3. The vehicle periphery monitoring apparatus according to claim 1 or 2, wherein the other vehicle candidate detector (102) further detects an engine exhaust pipe candidate (72) or a tire candidate (74a, 74b) in the image; and
   when the other vehicle candidate detector (102) detects the high-luminance area (76) above the engine exhaust pipe candidate (72) or the tire candidate (74a, 74b), the other vehicle determiner (103) determines an object including the pedestrian head candidate (70a, 70b) and the engine exhaust pipe candidate (72) or an object including the pedestrian head candidate (70a, 70b) and the tire candidate (74a, 74b) as the other vehicle (Car, Cara).

4. The vehicle periphery monitoring apparatus according to any one of claims 1 through 3, wherein when the other vehicle candidate detector (102) further detects another high-luminance area (92h) equal to or greater than a prescribed area or a low-luminance area (921) equal to or greater than a prescribed area above the pedestrian head candidate in the image, the other vehicle determiner (103) determines the pedestrian head candidate as part of the other vehicle (Car, Cara) regardless whether or not the other vehicle candidate detector (102) detects the high-luminance area (72, 76, 76a) which is greater in area than the pedestrian head candidate and has the horizontal length.

5. The vehicle periphery monitoring apparatus according to claim 4, wherein if the temperature outside of the vehicle is equal to or higher than a first temperature, then the other vehicle determiner (103) judges whether or not there is a low-luminance area (921) which is greater in area than the pedestrian head candidate, above the pedestrian head candidate, and if the temperature outside of the vehicle is equal to or lower than a second temperature which is lower than the first temperature, then the other vehicle determiner (103) judges whether or not there is a high-luminance area (92h) which is greater in area than the pedestrian head candidate, above the pedestrian head candidate.

FIG. 1

<u>10</u>

| 16 INFRARED CAMERA | 14 IMAGE PROCESSING UNIT |
|---|---|

IMAGE PROCESSING UNIT — 14

CPU — 14c

STORAGE UNIT — 14m

PEDESTRIAN HEAD CANDIDATE EXTRACTOR — 101

OTHER VEHICLE CANDIDATE DETECTOR — 102

OTHER VEHICLE DETERMINER — 103

CONTACT POSSIBILITY DETERMINER — 106

ATTENTION SEEKING OUTPUT GENERATION DETERMINER — 108

16
INFRARED CAMERA

22
YAW RATE SENSOR  Yr

18
VEHICLE SPEED SENSOR  Vs

20
BRAKE SENSOR  Br

24

26
IMAGE DISPLAY UNIT

FIG. 2

# FIG. 3

START

S1 TRAVELING ? — NO

YES

S2 ACQUIRE GRAYSCALE IMAGE, AND CONVERT IT INTO BINARIZED IMAGE

S3 PERFORM LABELING PROCESS (PEDESTRIAN HEAD CANDIDATE EXTRACTING PROCESS)

S4 PERFORM TARGET OBJECT DETERMINING PROCESS (OTHER VEHICLE CANDIDATE DETECTING PROCESS → OTHER VEHICLE DETERMINING PROCESS)

S5 PEDESTRIAN ? — NO

YES

S6 IS THERE PEDESTRIAN CONTACT POSSIBILITY ? — NO

YES

S7 AROUSE ATTENTION

END

FIG. 4

FIG. 5

FIG. 6

FIG. 7

FIG. 8A

FIG. 8B

# FIG. 9

90

|  | PRESENT | PAST |
|---|---|---|
| PEDESTRIAN HEAD CANDIDATE LIGHT 70aa | T1=(xT1, yT1) (HORIZONTAL, VERTICAL COORDINATES) | T0 |
| HIGH-LUMINANCE AREA 76a | R1 | R0 |
| ROOF 80 | A1 | A0 |
| LEFT FENDER 82 | L1 | L0 |

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003284057 A

- JP 4521642 B